Europäisches Patentamt

European Patent Office

Office européen des brevets

(11) Numéro de publication: **0 368 720**
**A1**

# DEMANDE DE BREVET EUROPEEN

(21) Numéro de dépôt: 89402979.2

(22) Date de dépôt: 27.10.89

(51) Int. Cl.5 **F16L 59/00**

(30) Priorité: 10.11.88 FR 8814708

(43) Date de publication de la demande:
16.05.90 Bulletin 90/20

(84) Etats contractants désignés:
BE DE ES GB GR IT LU NL

(71) Demandeur: WANNER ISOFI ISOLATION
Société Anonyme Dite:
250 Route de l'Empereur
F-92508 Rueil-Malmaison Cédex(FR)

(72) Inventeur: Rey, Louis
22 Route de Poivre Villez Sous Bailleul
F-22950 Saint Marcel(FR)
Inventeur: Imbert, Jean-Luc
12 rue des Garennes
F-78400 Chatou(FR)

(74) Mandataire: Jolly, Jean-Pierre et al
Cabinet BROT et JOLLY 83, rue d'Amsterdam
F-75008 Paris(FR)

(54) Elément de paroi isolante pare-vapeur, notamment pour chambre climatique.

(57) L'invention concerne un élément de paroi isolante pour chambre climatique.

L'élément de paroi comprend au moins une épaisseur de matière isolante (22), par exemple en produit alvéolaire, prise en sandwich à l'intérieur d'un panneau (14) creux et étanche, réalisé en une résine armée de fibres, et pourvu d'une feuillure (26) tout le long de son bord, destinée à l'assemblage avec des panneaux voisins, un conplexe pare-vapeur (24) étant intégré au panneau, lors de la fabrication, de manière à envelopper la matière isolante sur toutes ses faces.

FIG.3

## ELEMENT DE PAROI ISOLANTE PARE-VAPEUR, NOTAMMENT POUR CHAMBRE CLIMATIQUE.

La présente invention concerne la réalisation d'une paroi isolante pour une chambre climatique ou un tunnel cryogénique.

On rappelle qu'une chambre climatique est une enceinte étanche dans laquelle les caractéristiques aérodynamiques de certains équipements, tels que voitures automobiles, chars, avions, navettes spatiales, sont testées. On utilise à cet effet des maquettes réduites de ces appareils. Pour que les conditions d'expérimentation sur la maquette soient identiques à celles qui prévalent sur le modèle réel, il faut que le nombre de Reynolds Re soit le même dans les deux cas. On sait que $Re = VD\rho/\nu$
où V est la vitesse d'écoulement de l'air
D est un paramètre lié à la dimension du modèle
$\rho$ est la masse volumique de l'air, et
$\nu$ est le coefficient dynamique de l'air.

D étant réduit, pour que Re soit conservé, il faut augmenter la masse volumique. On doit donc opérer dans une atmosphère à basse température et à faible pression, par exemple à une température de 70° K environ et à une pression de 4 à 5 bars. Le maintien de telles conditions opératoires nécessite que la chambre soit parfaitement isolée vis-à-vis du milieu extérieur.

La paroi latérale d'une chambre climatique est généralement constituée par une virole métallique de forme cylindrique, revêtue intérieurement d'une couche de matière isolante, par exemple en un produit alvéolaire quelconque. Mais étant donné que ledit produit contient toujours des traces d'eau, celles-ci risquent de venir se déposer sur la surface de la maquette, et de fausser ainsi les conditions aérodynamiques du test.

Un but de la présente invention est donc de réaliser une paroi isolante pare-vapeur pour chambre climatique qui soit capable d'empêcher l'eau de sortir de l'isolant.

Un autre but de l'invention est de proposer une paroi de chambre climatique susceptible d'assurer une bonne isolation thermique dans les conditions opératoires, c'est-à-dire pour une température intérieure de 70° K et une température extérieure de 300° K.

Un troisième but est de réaliser une paroi qui conserve une bonne résistance mécanique à la température d'expérimentation. Dans les parois connues où aucune précaution n'est prise pour éviter la diminution de la résistance mécanique, la matière isolante se contracte sous l'action de la basse température interne à laquelle elle est soumise et se fissure, perdant ainsi une partie de ses caractéristiques.

Les chambres climatiques selon la technique antérieure, comportent une peau métallique qui recouvre la face intérieure de la couche de matière isolante constituant la paroi. Cette peau sert essentiellement à donner un aspect lisse à la paroi latérale et à favoriser de ce fait un bon écoulement de l'air. Pour sa fixation, la peau est munie sur sa face extérieure de tiges en matière peu conductrice de la chaleur, qui traversent la couche de matière isolante et vont chercher prise sur la virole extérieure. Mais il est clair que les zones de la couche isolante traversées par les tiges constituent des points de faible résistance mécanique où la matière isolante risque de se fissurer.

Un quatrième but de l'invention est donc de réaliser une paroi pour chambre climatique exempte de ce dernier inconvénient, c'est-à-dire qui ne présente pas de zones d'affaiblissement de la couche isolante, dues à la fixation d'une peau.

Ces buts ainsi que bien d'autres sont atteints grâce à l'élément de paroi pare-vapeur selon l'invention qui se caractérise en ce qu'il comprend au moins une épaisseur de matière isolante, par exemple en un produit alvéolaire, prise en sandwich à l'intérieur d'un panneau creux et étanche, réalisé en une résine armée de fibres, et pourvu d'une feuillure tout le long de son bord, destinée à l'assemblage avec des panneaux voisins, un complexe pare-vapeur étant intégré au panneau lors de la fabrication, de manière à envelopper la matière isolante sur toutes ses faces.

Selon un mode de réalisation préféré de l'invention, les faces latérales du panneau sont reliées entre elles par plusieurs ponts ou armatures définissant dans le panneau des compartiments remplis par des blocs indépendants de matière isolante.

Les armatures peuvent être perpendiculaires aux deux faces latérales et s'étendre sur toute la hauteur du panneau, les blocs d'isolant étant alors en forme de barres parallélépipédiques à section carrée ou rectangulaire. Mais elles peuvent aussi bien être inclinées par rapport aux faces latérales, alternativement dans un sens et dans l'autre d'une armature à la suivante, ce qui conduit à des blocs d'isolant ayant une section de forme trapézoïdale.

On peut également réaliser un élément de paroi en superposant au moins deux panneaux sandwich de mêmes dimensions et dépourvus de feuillure, avec un léger décalage de l'un par rapport à l'autre dans le sens diagonal de manière à faire apparaître une feuillure périphérique, et en les solidarisant par exemple par collage de leurs faces contiguës ou par une fixation mécanique appropriée.

Chaque bloc de matière peut être enveloppé séparément dans une feuille pare-vapeur. Mais, les blocs de matière isolante peuvent aussi bien être insérés dans leur compartiment sans pare-vapeur, la fonction pare-vapeur étant alors assurée par une feuille pare-vapeur qui enveloppe le panneau sur toutes ses faces ou qui est intégrée dans l'épaisseur de paroi du panneau.

Ce qui est remarquable dans le panneau selon l'invention c'est qu'il intègre en lui-même toutes les fonctions demandées à une paroi de chambre climatique, sans qu'il soit nécessaire de lui adjoindre ultérieurement d'autres éléments, comme c'est le cas pour les parois de la technique antérieure. Il présente en effet les qualités suivantes :

- En raison de sa structure en sandwich, le panneau a une résistance mécanique bien supérieure à celle d'un panneau de mêmes dimensions, réalisé dans la même matière, mais n'enfermant pas de matière isolante.

- Il n'est pas nécessaire d'utiliser une peau métallique intérieure, puisque le panneau sandwich peut être réalisé avec une face interne aussi lisse qu'on le désire, et cela sans dépense supplémentaire. Il en résulte que l'on n'a plus à utiliser de tige de fixation de peau traversant la couche de matière isolante.

- La fonction pare-vapeur est intimement liée au panneau grâce à la présence de la ou des feuille (s) pare-vapeur qui enveloppe (nt) le ou les blocs de matière isolante sur toutes ses (leurs) faces.

- En divisant le volume intérieur du panneau en volumes partiels, les armatures permettent d'absorber les variations dimensionnelles des blocs de matière isolante et de les bloquer en position. On écarte ainsi les problèmes dus à la fissuration de la matière isolante.

L'invention propose donc un panneau de chambre climatique, préfabriqué, qui emplit à lui seul toutes les fonctions, et qui est donc prêt au montage.

Plusieurs modes de réalisation de l'élément de paroi selon l'invention seront décrits à présent à titre d'exemples non limitatifs en regard des dessins annexés dans lesquels :

La figure 1 est une vue schématique en coupe de dessus d'une chambre climatique revêtue d'une paroi isolante ;

La figure 2 est une vue en perspective d'un élément de paroi isolante à plus grande échelle ;

La figure 3 est une vue en coupe suivant la ligne III-III de la figure 2, et montrant que le panneau est divisé intérieurement en compartiments contenant des blocs de matière isolante enveloppés individuellement par des pare-vapeur ;

La figure 4 montre une autre variante de réalisation, dans laquelle le pare-vapeur est intégré dans l'épaisseur des parois du panneau ;

La figure 5 est une vue en coupe d'une variante de réalisation, dans laquelle le panneau est enveloppé extérieurement par un pare-vapeur ;

La figure 6 représente encore une autre variante de réalisation du panneau ne comportant pas d'armatures internes ;

La figure 7 montre un élément de cloison formé par la superposition de deux panneaux ;

La figure 8 est une vue en coupe montrant le mode d'assemblage de deux panneaux voisins ;

La figure 9 est une vue en perspective de la réglette de la figure 8 ; et

La figure 10 est une variante du mode d'assemblage de la figure 8 prévoyant la fixation de profils intérieurs pour l'accrochage d'objets sur la cloison.

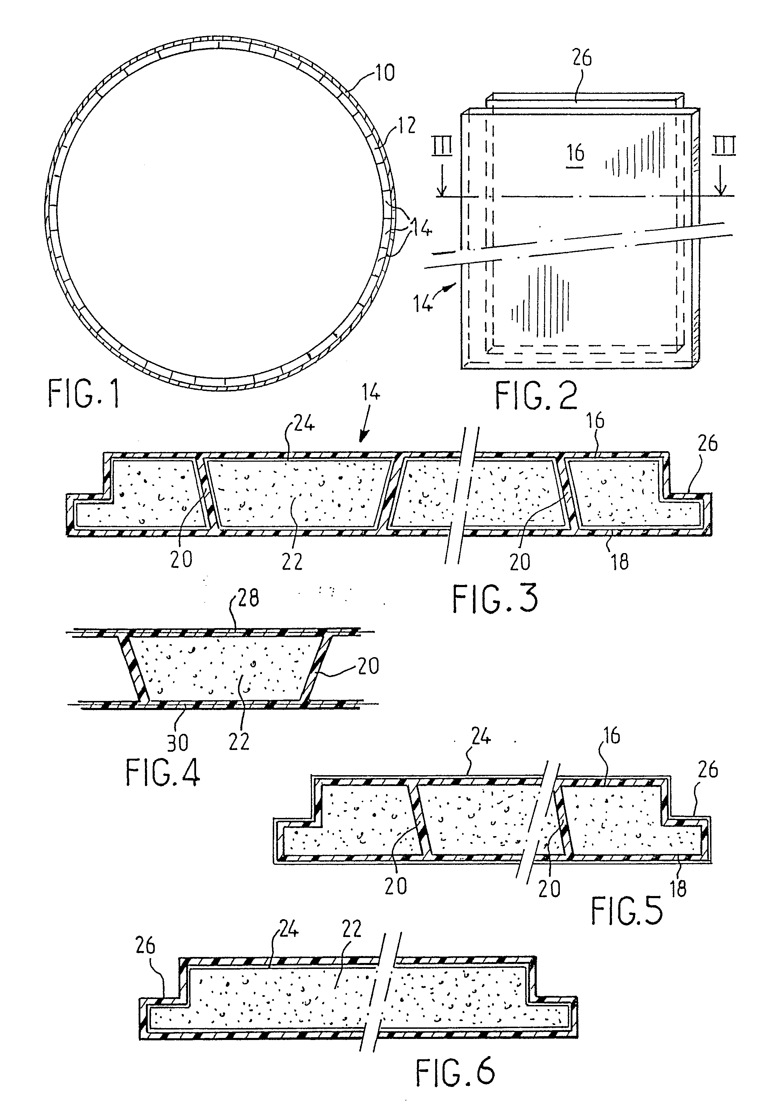

La chambre climatique représentée à la figure 1 comprend une paroi latérale constituée par une virole étanche métallique 10 de forme cylindrique, mais qui peut également être parallélépipédique. La virole repose sur le sol et est fermée à son extrémité supérieure par un plafond non représenté. Les parois de la chambre sont isolées au moyen d'un revêtement isolant 12 appliqué sur la face intérieure de la virole.

Selon l'invention, le revêtement est constitué par des éléments de paroi 14 juxtaposés, dont l'un est représenté en détail sur les figures 2 et 3. L'élément de paroi 14 présente une structure sandwich comprenant un panneau creux, de forme sensiblement parallélépipédique et réalisé en une résine synthétique, armée de fibres, par exemple minérales ou textiles, afin d'en augmenter la résistance mécanique. Ledit panneau est pourvu de deux faces planes ou galbées 16,18 selon la forme de la virole sur laquelle elles s'adaptent, qui sont reliées par une pluralité de ponts ou armatures 20 s'étendant sur toute la hauteur du panneau. Les armatures viennent de fabrication avec lesdites faces latérales, par exemple lors d'une opération de moulage ou d'extrusion.

Comme le montre la figure 3, les armatures sont inclinées sur les faces 16, 18, alternativement dans un sens ou dans l'autre, de manière à définir entre elles des passages de section trapézoïdale. Ces passages logent des barres de même forme, réalisées en une matière isolante 22, par exemple en un produit alvéolaire. Il va de soi que les armatures peuvent être perpendiculaires aux faces 16, 18. Dans ce cas, les blocs de matière auront une section carrée ou rectangulaire.

La résine armée n'étant pas étanche à la vapeur d'eau, il est nécessaire d'utiliser un pare-vapeur pour empêcher que la vapeur résiduelle se trouvant dans les blocs de matière isolante n'émigre vers l'intérieur de la chambre climatique, au risque de fausser les conditions aérodynamiques de la maquette testée

Le pare-vapeur est constitué par exemple par un complexe à base de feuilles métalliques et organiques de très faible épaisseur, par exemple en aluminium et en polytéraphtalate. Dans le mode de réalisation de la figure 3, chaque bloc 22 de matière isolante est enveloppé individuellement sur toutes ses faces, y compris sur ses faces d'extrémité, par une feuille pare-vapeur.

Le panneau 16 est pourvu d'une feuillure périphérique 26 permettant d'assembler les panneaux entre eux, comme on l'expliquera par la suite. La feuillure a elle aussi une structure creuse en sandwich et est remplie d'un bloc de matière isolante de forme adéquate, enveloppé d'une feuille pare-vapeur.

La variante de réalisation de la figure 4 ne diffère de celle de la figure 2 que par le fait qu'au lieu d'envelopper chaque bloc de matière isolante avec une feuille pare-vapeur, on utilise des feuille pare-vapeur 28, 30 intégrée lors du moulage dans les faces 16, 18 du panneau. On notera qu'il n'est pas nécessaire d'intégrer des feuilles pare-vapeur dans les armatures 20, du moment que la vapeur est emprisonnée entre les feuilles 28,30.

Dans le mode de réalisation de la figure 5, une unique feuille pare-vapeur 24 enveloppe le panneau extérieurement.

Le panneau selon la figure 6 se distingue de celui de la figure 2 par le fait qu'il ne comporte pas d'armatures.

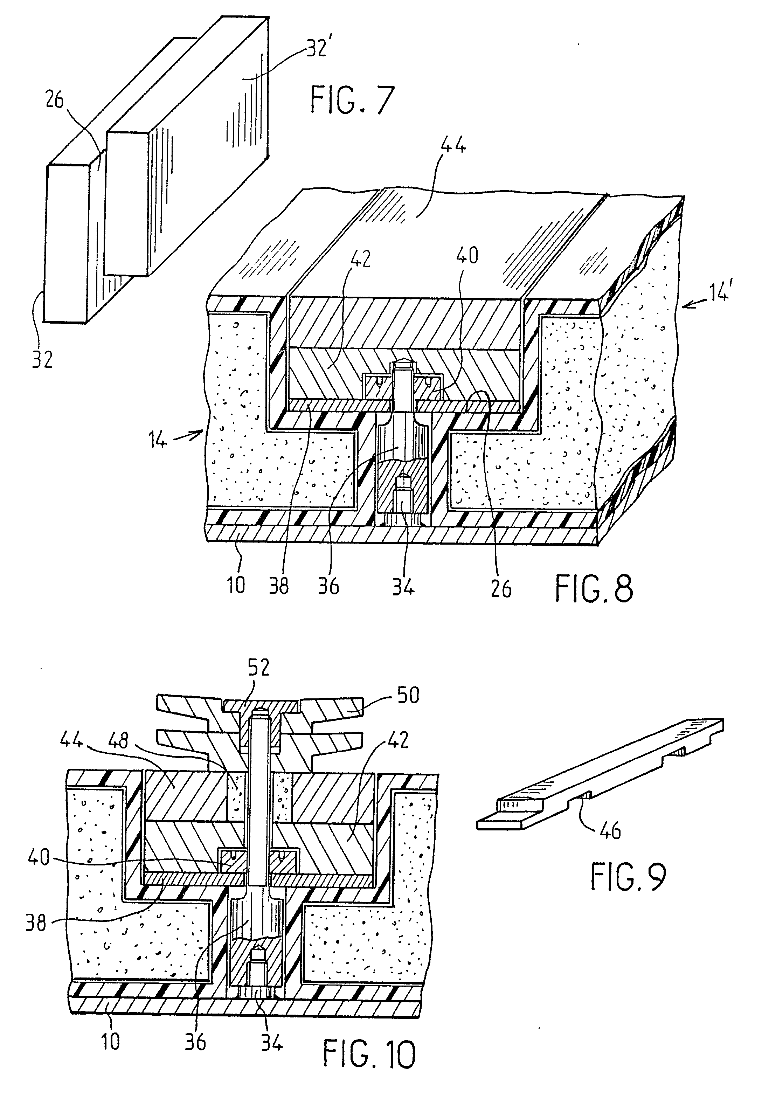

Dans le mode de réalisation de la figure 7, le panneau est constitué de deux panneaux rectangulaires distincts 32, 32' du type de celui illustré sur la figure 2, mais ne comportant pas de feuillure. Ces panneaux sont superposés en les décalant légèrement dans le sens diagonal l'un par rapport à l'autre de manière à faire apparaître une feuillure périphérique 26, et sont solidarisés par tout moyen connu.

On décrira à présent le mode de réalisation des panneaux, en regard des figures 8 et 9. Deux panneaux 14, 14' sont appliqués côte à côte contre la paroi intérieure de la virole 10 avec leurs côtés verticaux (figure 2) orientés dans le sens de la hauteur de la virole et leurs feuillures 26 tournées vers l'intérieur de la virole.

Les deux panneaux sont disposés de part et d'autre d'une rangée verticale de tiges filetées 34 soudées sur la virole, une seule tige filetée étant représentée sur la figure 8. Sur ladite tige est vissée la tête creuse d'un goujon 36 qui fait saillie dans le canal formé par les deux feuillures 26. Sur le goujon est enfilée une rondelle 38 qui prend appui sur les feuillures. Un écrou 40 est ensuite vissé sur la portion de goujon faisant saillie au-dessus de la rondelle, assurant ainsi un blocage énergique des panneaux sur la virole. L'écrou est ensuite coiffé d'une cale 42, et enfin, le canal formé entre les panneaux reçoit une réglette 44 qui emplit exactement le canal et dont la paroi externe vient exactement à l'affleurement de celles des deux panneaux. La réglette présente sur sa face externe des encoches 46 destinées à recevoir les écrous 40.

Dans la variante de réalisation de la figure 10, la tige filetée du goujon 36 est suffisamment longue pour qu'elle émerge à l'extérieur du canal formé par les feuillures 26. Comme dans le mode de réalisation précédent, la tige traverse une rondelle 38 et un écrou de blocage 40, mais dans le cas présent, elle traverse également une cale 42, un insert en matière isolante 48 fixé dans un trou percé dans la réglette 44 et un trou percé dans un profil 50 destiné à la fixation d'objets sur la paroi intérieure de la chambre climatique. Le profil est fixé au moyen de douilles taraudées 52 visées sur le goujon.

La description ci-dessus démontre par des exemples la contribution originale et non évidente apportée par l'invention. Il est prévu un panneau tout prêt au montage, intégrant en lui toutes les fonctions d'un panneau isolant de chambre climatique, sans qu'il soit nécessaire de lui adjoindre d'autres éléments.

## Revendications

1- Elément de paroi isolante, notamment pour chambre climatique, caractérisé en ce qu'il comprend au moins une épaisseur de matière isolante (22), par exemple en produit alvéolaire, prise en sandwich à l'intérieur d'un panneau (14) creux et étanche, réalisé en une résine armée de fibres, et pourvu d'une feuillure (26) tout le long de son bord, destinée à l'assemblage avec des panneaux voisins, un complexe pare-vapeur (24;28,30) étant intégré au panneau, lors de la fabrication, de manière à envelopper la matière isolante sur toutes ses faces.

2- Elément de paroi isolante selon la revendication 1, caractérisé en ce que les faces latérales (16,18) du panneau sont reliées entre elles par plusieurs armatures (20) définissant dans le panneau des volumes partiels occupés par des blocs indépendants de matière isolante.

3- Elément de paroi isolante selon la revendication 2, caractérisé en ce que les armatures (20) sont réalisées dans la même matière que le panneau et viennent de corps avec celui-ci, par exemple par moulage ou extrusion.

4- Elément de paroi isolante selon la revendication 2, caractérisé en ce que les armatures (20) sont perpendiculaires aux deux faces latérales (16,18) et s'étendent sur toute la hauteur du panneau, les blocs d'isolant étant alors en forme de barres parallélépipédiques à section carrée ou rectangulaire.

5- Elément de paroi isolante selon la revendication 2, caractérisé en ce que les armatures (20) sont inclinées par rapport aux parois latérales avec des inclinaisons alternativement dans un sens et dans l'autre, de manière à définir entre elles des volumes pour des blocs d'isolant (22) à section trapézoïdale.

6- Elément de paroi isolante selon la revendication 1, caractérisé en ce que le complexe pare-vapeur est à base de feuilles métalliques et organiques de très faible épaisseur, par exemple en aluminium et en polytéraphtalate.

7- Elément de paroi isolante selon la revendication 2, caractérisé en ce que chaque bloc de matière isolante (22) est enveloppé individuellement sur toutes ses faces par une feuille pare-vapeur (24).

8- Elément de paroi isolante selon l'une des revendications 1 et 2, caractérisé en ce que deux feuilles pare-vapeur (28,30) sont noyées dans l'épaisseur des faces latérales (16,18) du panneau.

9- Elément de paroi isolante selon la revendication 1, caractérisé en ce que le panneau est enveloppé extérieurement sur toutes ses faces par une feuille pare-vapeur.

10- Elément de paroi isolante selon l'une des revendications précédentes, caractérisé en ce qu'il comprend deux panneaux sandwich rectangulaires (32,32') dépourvus de feuillure, et qui sont superposés avec un décalage dans le sens d'une diagonale, de manière à faire apparaître une feuillure périphérique (26), lesdits panneaux étant solidarisés pour tout moyen approprié, par exemple par collage de leurs faces contiguës ou par une fixation mécanique.

11- Elément de paroi isolante selon l'une des revendications précédentes, caractérisé en ce que l'assemblage de deux panneaux juxtaposés (14,14')sur une virole (10), est réalisé au moyen de goujons (36) vissés sur des tiges filetées (34) soudées sur la face interne de la virole, la tige du goujon traversant des rondelles (38) qui prennent appui sur les feuillures (26) des deux panneaux juxtaposés, des écrous (40) étant ensuite vissés sur les goujons afin de bloquer les panneaux sur la virole, et en ce que le canal formé par les feuillures des deux panneaux juxtaposés est obturé au moyen de cales (42) absorbant l'épaisseur des écrous et par une réglette (44) dont la face intérieure vient au même niveau que les faces intérieures des panneaux (14,14').

12- Elément de paroi selon la revendication 11, caractérisé en ce que le goujon (36) traverse également la cale (42) et la réglette (44) et son extrémité qui fait saillie au-dessus de la réglette sert à la fixation de profils supports (50).

FIG.1

FIG.2

FIG.3

FIG.4

FIG.5

FIG.6

FIG. 7

FIG. 8

FIG. 9

FIG. 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 998 024 (L. FRANDSEN) <br> * figures 2,7,8; revendications * | 1,2,4, 11 | F 16 L 59/00 |
| A | CA-A- 434 654 (ROHPAPPEN-FABRIK WORMS) <br> * figures; revendication 6 * | 1,6 | |
| A | GB-A-2 011 837 (W. BECKER) <br> * figure; abrégé * | 1,6,9 | |
| A | US-A-3 289 624 (H. R. PRATT) <br> * figures 4,5 * | 1 | |
| A | US-A-3 339 780 (C. D. FORMAN et al.) <br> * figure 3 * | 1,11 | |

DOMAINES TECHNIQUES
RECHERCHES (Int. Cl.5)

F 16 L

Le présent rapport a été établi pour toutes les revendications

| Lieu de la recherche | Date d'achèvement de la recherche | Examinateur |
|---|---|---|
| BERLIN | 16-01-1990 | SCHAEFFLER C.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)